# EUROPEAN PATENT SPECIFICATION

(11) **EP 4 137 656 B1**
(45) Date of publication and mention of the grant of the patent: **21.01.2026**
(21) Application number: 22020384.8
(22) Date of filing: 10.08.2022
(51) Int. Cl.: E04H 5/04, H02B 1/56, H02B 7/06

(54) **BUILDING CONSTRUCTION OF A SUBSTATION**
BAUKONSTRUKTION EINER UMSPANNSTATION
CONSTRUCTION DE BÂTIMENT D'UNE STATION DE TRANSFORMATION

(30) Priority: 19.08.2021 EE 202100020
(43) Date of publication of application: 22.02.2023
(73) Proprietor: Eltech Solutions OÜ, 76906 Harku vald (EE)
(72) Inventor: Valtri, Harri, 76608 Keila (EE); Lillepuu, Marko, 76608 Keila (EE)
(74) Representative: Koitel, Raivo

(56) References cited:
- DE-A1- 3 110 304
- DE-U1- 202004 016 984
- DE-U1- 29 618 362

## Description

### Technical field

The invention belongs in the field of electricity supply, specifically, the invention relates to the building structure of an externally serviced substation.

### Prior art

For safety purposes there is a need to provide a solution for the release of explosion gases of a medium-voltage device of a prefabricated externally serviced compound substation in a way that guarantees safety for the service personnel of the compound substation (a possible performer of the control or switching operations of the medium-voltage device) and for persons in its immediate vicinity, who are not aware of electrical hazards. Directing gases from the medium-voltage equipment room to the transformer room is necessary so that in the event of a failure/explosion of a medium-voltage device, toxic and hot gases are directed away from persons, who are in the immediate vicinity of the substation.

In addition, the expansion of medium-voltage equipment space is currently relevant in order to facilitate the use of more medium-voltage cells or wider medium-voltage equipment in one substation and thereby improve the functionality of the substation.

Such externally serviced substations have a foundation with a pit integrated with the housing, serving both as a cable basement and an oil sump (to avoid environmental pollution). The substations are factory equipped with cables to connect the transformer to low and medium-voltage devices.

Known is ABB compact secondary substation "Mercury 10cc externally serviced metal housing compact substation" or its analogues, which comprise medium-voltage equipment room, transformer room, low voltage equipment room, walls, doors, roof, foundation. Medium-voltage cables are led from one room to another by installing the cable next to the device through a partition wall by a metal part. In the device, the explosion gases of the medium-voltage device are guided into the transformer room through "a valve or an opening" located in the middle of the partition wall, which opens in the event of an explosion and directs the explosion gases onto the transformer, where these are guided upwards along the cooling fins of the transformer. This solution is technically deficient in that by its structure, the medium-voltage device must be built so that the bottom of the device is closed in order to avoid possible explosion gases or arc flame from being released or otherwise reflected towards the front of the device, which could damage a possible performer of control or switching operations. In the case of this solution, useful equipment space is lost in the medium-voltage equipment room - as a rule, this solution requires the omission of one medium-voltage cell. Also, with this solution, there are significant restrictions on the choice of medium-voltage equipment, and the use of medium-voltage equipment from other manufacturers in the substation may not be competitive from the aspect of the final cost. In addition, as a result of the arc flame of the medium-voltage equipment, the transformer could be damaged beyond repair.

In addition, solutions known on the market employ other additional solutions to ensure safety in the event of an explosion.

One possible method is to increase the volume of the cable basement under a medium-voltage device in such a way that the cable basement could withhold the explosion gases, and the remaining medium-voltage equipment room is made tightly closed. However, this solution requires a cable basement that higher and, if possible, larger by length/width, which increases the dimensions of the substation in such a way that by its height or width the substation no longer fits on the trailer of a truck and its transportation over longer distances becomes more expensive.

Another option is to build the foundation of the compact substation lower and to shift the partition wall between the medium-voltage equipment room and the transformer room in the case of the foundation and the metal part in such a way that a duct of uniform width is created along the entire partition wall, which could also be used for leading medium-voltage cables from one room to another. A disadvantage of this solution is that in the transformer room it is not possible to control the direction of the explosion gases released from the medium-voltage equipment room, and the explosion gases, incl. arc flame, could be ejected through the ventilation openings used for cooling the transformer room, and injure people who might be in the vicinity.

Known is "Externally serviced compact substation with metal housing HEKA 1VM" (https://harjuelekter.com/wp-content/uploads/2021/01/tooteleht_ hekalvm70_est_1.pdf) of Harju Elekter, where the execution is based on both solutions described above. The foundation and the metal part of the partition wall of the equipment rooms of this unit are shifted (the back wall of the foundation and the medium-voltage unit are not aligned) and the cable basement is larger in height to provide a safe capacity. There is a void space between the foundation and the back wall of the medium-voltage unit along the entire length of the substation wall, for leading medium-voltage cables and possible explosion gases into the transformer room. The disadvantage of this solution is that the installation space for the transformer is reduced, wherefore the transformer installed cannot be large enough.

Known is DE29618362U1 (Betonbau GmbH, published 06.02.1997) and DE3110304A1 (Betonbau GmbH, published 30.09.1982).

### Description of the invention

The purpose of the invention is to expand the medium-voltage equipment room by changing the structure of the substation, contributing to utilizing the medium-voltage equipment room in its maximum width and installing larger/wider and/or a higher number of individual devices or cells in the substation. Another objective of the invention is to guide explosion gases from the medium-voltage equipment room to the transformer room, so that in the event of an equipment explosion, the toxic and hot gases are directed safely away from any persons in the vicinity.

To achieve these goals, the structure of the substation has been changed in such a way that the closed foundation part of the building structure also comprises a wall recess through which medium-voltage cables can be routed from one room to another and possible explosion gases can be guided safely to the transformer room. In the transformer room, there is a metal duct joined with the wall recess, facing upwards, for accommodating cables and for guiding explosion gases.

The building structure of the substation of the invention comprises a medium-voltage equipment room, a transformer room, a low-voltage equipment room, walls, doors, a roof, a duct, a concrete foundation with a pit, which comprises a cable basement that is under the medium-voltage equipment room and is open on the outside of the substation, a cable basement that is under the low-voltage equipment room and is open on the outside of the substation, and an oil tray that is under the transformer room and has closed sides, and a wall recess in the foundation, positioned in one corner of the oil tray and open on the side facing the cable basement of medium-voltage equipment. An upwards pointed duct, which is a box with side openings, is placed on top of the wall recess. The wall recess and duct are intended for routing the cables of medium-voltage equipment to the transformer and for guiding explosion gases to the upper area of the transformer room.

### List of figures

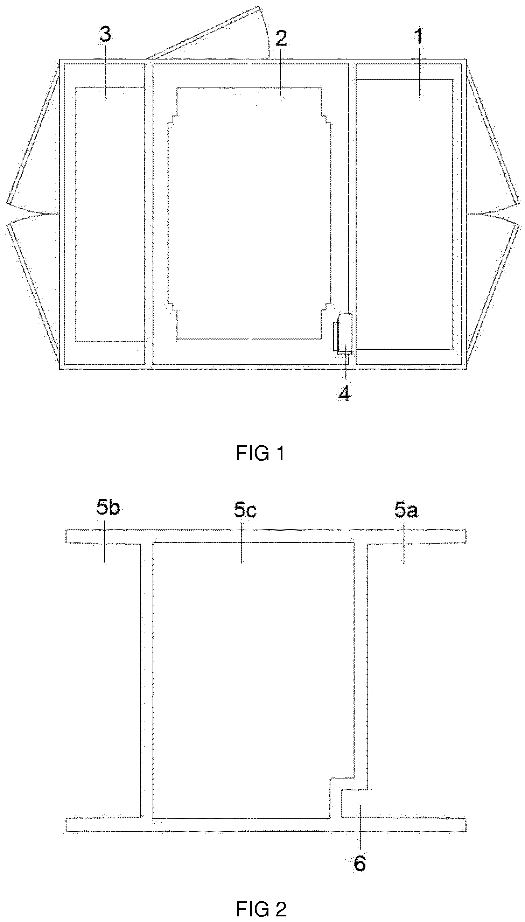

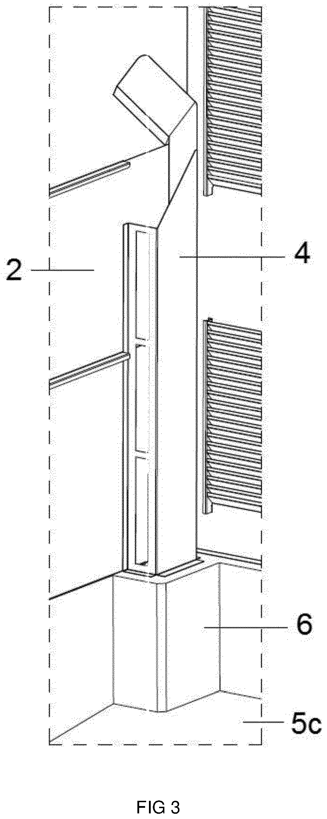

Figure fig 1 is the substation in top view;
Figure fig 2 is the foundation in top view;
Figure fig 3 is the wall recess and duct.

### Embodiment of the invention

The building structure of a substation corresponding to the invention comprises a medium-voltage equipment room 1, a transformer room 2, a low-voltage equipment room 3, walls, doors and a roof, a duct 4, a concrete foundation with a pit, which comprises a cable basement 5a that is under the medium-voltage equipment room 1 and is open on the outside of the substation, a cable basement 5b that is under the low-voltage equipment room 3 and is open on the outside of the substation, and an oil tray 5c that is under the transformer room 2, has closed sides, and a wall recess 6.

The wall recess 6 is open on one side and can be accessed in medium-voltage equipment room 1 through the cable basement 5a of medium-voltage equipment. On the wall recess 6 in the transformer room 2, duct 4 is installed, intended for accommodating and routing medium-voltage cables of medium-voltage room 1 through cable basement 5a and for guiding explosion gases of medium-voltage equipment to transformer room 2. Duct 4 is located in transformer room 2 in a part, which is not used, i.e. the corners of the transformer are empty and duct 4 is placed in one of the corners in transformer room 2. Duct 4 is preferably a quadrangular box with side openings, pointed upwards in transformer room 2, so that any possible explosion gases cannot exit from the substation through the ventilation openings that are in the immediate vicinity of the transformer in transformer room 2.

Parts 5a and 5b of the concrete foundation function as the cable basement, cable basement 5a of medium-voltage equipment and cable basement 5b of low-voltage equipment, respectively.

Oil tray 5c functions as the oil tray of the transformer and should have a sufficient capacity to contain the oil of the whole transformer in case of a transformer fault.

In one of the corners of the oil tray 5c, which is closed on the sides, there is preferably a quadrangular wall recess 6, where the sides facing the oil tray 5c are closed and the side facing the cable basement 5a of medium-voltage equipment is open.

Duct 4 rests on the wall recess 6.

In the presented solution, duct 4 and wall recess 6 allow the oil tray 5c to be used to the maximum extent.

In the presented solution, the medium-voltage equipment cable connected to the transformer is installed in duct 4. Duct 4 is also intended for guiding possible explosion gases from the medium-voltage equipment room 1 through the medium-voltage equipment cable basement 5a to the transformer room 2. Since medium-voltage equipment is the component with the highest risk level in terms of electrical safety of the substation, in the event of an electric arc flame of this equipment, the explosion gases are first released into the medium-voltage equipment cable basement 5a under the medium-voltage equipment room 1, from where the already partially cooled gases are guided out of the medium-voltage equipment room 1 to the transformer room 2, which is located on the other side of the wall. In order to discharge the gases from the substation, wall recess 6 is used along with duct 4 located on top of it, which guides the gases to the upper space of the transformer room 2, thus eliminating dangerous hot gases or arc flame from being ejected from transformer room 2 through the ventilation openings in the immediate vicinity of the lower part of the transformer. Cooled and safe gases are guided out from the substation through upper ventilation openings or the openings located at the edge of the ceiling of transformer room 2.

In the case of the presented solution, the volume of the foundation with the pit is optimized, since possible explosion gases are guided to another room and this allows the production of lower compact substations, contributing to improved competitiveness due to transportation costs. The duct is designed as small as optimally possible to ensure separation of explosion gases and also to keep the usable volume in the transformer room of the substation as small as possible, facilitating the installation of increasingly larger transformers in the transformer room. With a substation, the direction of explosion gases is also important, which must not under any circumstances move towards the ventilation openings in the immediate vicinity of the transformer in the transformer room, but upwards instead, so that the gases do not exit through the corresponding ventilation openings of the substation, where bystanders could be injured.

Explosion gases released from the duct are discharged in the direction of the ceiling of the transformer room, and the gas release path in this solution is sufficiently long, so that by the time the explosion gases reach the end/top of the gas duct and the ceiling of the transformer room, there is no longer any arc flame or other burning particles in them, making their further discharge from the substation through the upper ventilation openings of the transformer room or opening at the edge of the transformer room ceiling completely safe. In the case of this solution, even in the event of an explosion, no explosion gases or arc flame are emitted in the direction of the transformer, which remains completely intact. In addition, the room of medium-voltage equipment has maximum capacity, allowing for the installation of medium-voltage cells or medium-voltage individual units over almost the entire width of the building or also in larger numbers.

The building structure according to the invention allows to keep the dimensions of the substation as a whole such that by its height and width, a compact substation fits in a standard closed semi-trailer, making it possible to deliver substations to customers over longer distances with more favourable delivery costs. The height of the substation foundation has been reduced to the maximum in order to save on the volume of the concrete of the foundation, which in turn reduces the weight of the substation, which can be critical in case of some installation and lifting works.

The substation used in the invention is a prefabricated compact substation manufactured according to the standard IEC-62271-202:2014.

## Claims

1. A building structure of a substation comprising a medium-voltage equipment room (1), a transformer room (2), a low-voltage equipment room (3), walls, doors and a roof, and a concrete foundation with a pit that comprises a cable basement (5a) that is under the medium-voltage equipment room and is open on the outside of the substation, a cable basement (5b) that is under the low-voltage equipment room and is open on the outside of the substation, and an oil tray (5c) that is under the transformer room and has closed sides, **characterized in that** the building structure of the substation further comprises a duct (4) in the transformer room (2) and a wall recess (6) of said oil tray (5c), wherein the duct (4) is positioned on the wall recess (6), the wall recess (6) is located in the corner of the oil tray (5c), the sides of the wall recess (6) facing the oil tray (5c) are closed and the side facing the cable basement (5a) of medium-voltage equipment is open and which can be accessed from the medium-voltage equipment room (1) through the cable basement (5a) of said medium-voltage equipment room (1), wherein the duct (4) is a quadrangular metal box with side openings, pointed upwards in the transformer room (2).

2. The building structure of a substation according to claim 1, **characterized in that** the wall recess (6) is quadrangular.

## Patentansprüche

1. Eine Baukonstruktion einer Umspannstation, beinhaltend einen Mittelspannungsanlagenraum (1), einen Transformatorraum (2), einen Niederspannungsanlagenraum (3), Wände, Türen und ein Dach und einen Betonunterbau mit einer Grube, die einen Kabelkeller (5a), der sich unter dem Mittelspannungsanlagenraum befindet und an der Außenseite der Umspannstation offen ist, einen Kabelkeller (5b), der sich unter dem Niederspannungsanlagenraum befindet und an der Außenseite der Umspannstation offen ist, und eine Ölwanne (5c), die sich unter dem Transformatorraum befindet und geschlossene Seiten aufweist, beinhaltet, **dadurch gekennzeichnet, dass** die Baukonstruktion der Umspannstation ferner einen Schacht (4) in dem Transformatorraum (2) und eine Wandaussparung (6) der Ölwanne (5c) beinhaltet, wobei der Schacht (4) auf der Wandaussparung (6) positioniert ist, sich die Wandaussparung (6) in der Ecke der Ölwanne (5c) befindet, die Seiten der Wandaussparung (6), die der Ölwanne (5c) zugewandt sind, geschlossen sind und die Seite, die dem Kabelkeller (5a) der Mittelspannungsanlage zugewandt ist, offen ist und die von dem Mittelspannungsanlagenraum (1) durch den Kabelkeller (5a) des Mittelspannungsanlagenraums (1) zugänglich ist, wobei der Schacht (4) ein viereckiger Metallkasten mit Seitenöffnungen ist, der in dem Transformatorraum (2) nach oben gerichtet ist.

2. Baukonstruktion einer Umspannstation gemäß Anspruch 1, **dadurch gekennzeichnet, dass** die Wandaussparung (6) viereckig ist.

## Revendications

1. Structure de bâtiment d'une sous-station électrique comprenant une salle d'équipement moyenne tension (1), une salle de transformateur (2), une salle d'équipement basse tension (3), des murs, des portes et un toit, et une fondation en béton avec une fosse qui comprend un sous-sol pour câbles (5a) qui est sous la salle d'équipement moyenne tension et est ouvert sur l'extérieur de la sous-station, un sous-sol pour câbles (5b) qui est sous la salle d'équipement basse tension et est ouvert sur l'extérieur de la sous-station, et un bac à huile (5c) qui est sous la salle de transformateur et a des côtés fermés, **caractérisée en ce que** la structure de construction de la sous-station électrique comprend en outre un conduit (4) dans la salle de transformateur (2) et un renfoncement de paroi (6) dudit bac à huile (5c), le conduit (4) étant positionné sur le renfoncement de paroi (6), le renfoncement de paroi (6) étant situé dans le coin du bac à huile (5c), les côtés du renfoncement de paroi (6) faisant face au bac à huile (5c) étant fermés et le côté faisant face au sous-sol pour câbles (5a) de l'équipement moyenne tension étant ouvert et auquel il est possible d'accéder depuis la salle d'équipement moyenne tension (1) à travers le sous-sol pour câbles (5a) de ladite salle d'équipement moyenne tension (1), le conduit (4) étant une boîte métallique quadrangulaire avec des ouvertures latérales, pointées vers le haut dans la salle de transformateur (2).

2. La structure de bâtiment d'une sous-station électrique selon la revendication 1, **caractérisée en ce que** le renfoncement de paroi (6) est quadrangulaire.
